Europäisches Patentamt

European Patent Office

Office européen des brevets

(19)

(11) Numéro de publication: **0 396 171**

**A1**

(12)

# DEMANDE DE BREVET EUROPEEN

(21) Numéro de dépôt: **90200993.5**

(51) Int. Cl.5: **G06K 9/66, G06F 15/70**

(22) Date de dépôt: **20.04.90**

(30) Priorité: **26.04.89 FR 8905533**

(43) Date de publication de la demande:
**07.11.90 Bulletin 90/45**

(84) Etats contractants désignés:
**DE FR GB SE**

(71) Demandeur: **LABORATOIRES
D'ELECTRONIQUE PHILIPS
3, Avenue Descartes
F-94450 Limeil-Brévannes(FR)**

(84) **FR**

Demandeur: **N.V. Philips'
Gloeilampenfabrieken
Groenewoudseweg 1
NL-5621 BA Eindhoven(NL)**

(84) **DE GB SE**

(72) Inventeur: **Sirat, Jacques-Ariel
Societé civile S.P.I.D., 209, rue de l'Université
F-75007 Paris(FR)**
Inventeur: **Viala, Jean-Renaud
Societé civile S.P.I.D., 209, rue de l'Université
F-75007 Paris(FR)**
Inventeur: **Remus, Christian
Societé civile S.P.I.D., 209, rue de l'Université
F-75007 Paris(FR)**

(74) Mandataire: **Landousy, Christian et al
Société Civile S.P.I.D. 156, Boulevard
Haussmann
F-75008 Paris(FR)**

(54) **Procédé pour l'analyse de textures et analyseur.**

(57) Procédé pour l'analyse de textures associées à un flux de données et analyseur mettant en oeuvre le procédé. L'analyseur opère une transformée à l'aide de réseaux de neurones qui sont mis en compétition. Après la phase de résolution le procédé détermine le réseau de neurones qui délivre le meilleur résultat pour chaque classe d'exemples présentés et émet un index de sélection. Celui-ci permet ainsi de visualiser les textures par exemple d'une image. Il est possible de regrouper les résultats par familles. Les coefficients synaptiques des réseaux de neurones peuvent être chargés à partir d'une mémoire.

Application aux données d'images, acoustiques...

FIG. 4

## PROCEDE POUR L'ANALYSE DE TEXTURES ET ANALYSEUR".

L'invention concerne un procédé pour l'analyse de textures associées à un flux de données organisé en classes de données.

Elle concerne également un analyseur à réseau de neurones mettant en oeuvre un tel procédé. L'invention a ses applications dans la reconnaissance de forme, de scènes, d'images, de lieux, de sons, etc... par exemple dans les domaines de l'analyse d'images pour la télévision, la cartographie, la protection périmétrique, la prospection pétrolière ou dans l'analyse de phénomènes acoustiques ou dans l'analyse de "signatures" de signaux de données.

Un procédé de ce genre est connu par exemple du document :
"Cooccurence matrices and subspace methods in texture analysis". J. PARKKINEN and E. OJA Proceedings 7th International Conference on Pattern Recognition 30th July -2nd August 1984 Montreal (Canada).

Selon cet art antérieur les classes de textures sont représentées par des sous-espaces linéaires qui sont non bornés et non quantifiés. Ainsi par exemple dans un espace à trois dimensions telles que la luminance moyenne, la luminance maximale et le contraste, l'art antérieur découpe cet espace selon des plans pour chaque classe de textures dans lesquels les points caractéristiques des exemples se répartissent dans chaque plan de manière uniforme. Dans un traitement réel la qualité d'analyse de textures qui en résulte n'est pas satisfaisante car elle ne correspond pas à la distribution réelle desdites caractéristiques. Celles-ci en effet peuvent être mieux décrites par une distribution bornée et quantifiée toujours incluse dans lesdits plans. Ceci n'apparaît pas comme étant possible par le document de l'art antérieur.

Ainsi le problème posé est d'opérer la reconnaissance de textures modélisées par des distributions bornées et/ou quantifiées afin de permettre d'exploiter cette information de texture. Cette exploitation peut être faite soit directement en visualisant par exemple les textures soit indirectement en permettant le choix d'un traitement ultérieur.

La solution consiste en un procédé pour l'analyse de textures associées à un flux de données organisé en classes de données mis en oeuvre à l'aide d'un analyseur qui opère une transformée à l'aide de réseaux de neurones d'analyse ayant un nombre de neurones d'entrée supérieur ou égal au nombre de neurones de sortie, le procédé mettant en compétition les réseaux de neurones selon les étapes suivantes :
- initialisation des coefficients synaptiques de chaque réseau de neurones,

- introduction dans les réseaux de neurones de classes d'exemples présentés sous la forme de caractéristiques locales propres à chaque donnée,
- apprentissage par les réseaux de neurones par adaptation de leurs coefficients synaptiques à des exemples de blocs de données d'entrée,
- résolution par les réseaux de neurones d'un flux de données d'entrée afin d'opérer des classifications de données pour délivrer des informations de classes de textures relatives au flux de données,
- détermination du réseau de neurones qui délivre le meilleur résultat pour chaque classe d'exemples présentés sur la base d'un critère d'erreur entre la sortie obtenue et une référence choisie et attribution de chaque réseau de neurones à la classe qu'il représente le mieux et émission d'un index de sélection.

Sans perdre de sa généralité l'exposé va être développé dans le cas d'une analyse d'images. Mais l'invention peut être transposée sans difficulté à d'autres types de flux de données.

Le procédé consiste à associer à un réseau donné une texture ou une classe de textures, et à attribuer à chaque partie de l'image (pixels, bloc de pixels,...) le réseau qui est le mieux adapté c'est-à-dire qu'il s'agit de trouver le sous-espace le plus proche. Le procédé décrit comprend une phase d'apprentissage supervisé ou non supervisé et/ou une phase de classification.

Pour cela on utilise M réseaux de neurones $R_i$ avec $1 < i \leq M$. Un réseau est organisé en $K_i$ couches avec $N_i^l$ neurones dans la couche d'indice l. Tous les réseaux de neurones ont le même nombre de neurones d'entrée $N_i^o = N$. Le nombre de sortie peut être égal ou différent du nombre d'entrée N.

Chaque réseau reçoit en entrée N données qui caractérisent par exemple un point d'image. Ces caractéristiques locales d'une donnée peuvent se présenter de diverses manières. Pour un élément d'image donné, il peut s'agir d'une valeur propre à l'élément ou d'une moyenne des données de ses plus proches voisins, données relatives à la luminance, au contraste,... Il peut s'agir d'autres caractéristiques locales de la donnée par exemple le minimum, le maximum ou toute autre caractéristique.

Avant d'effectuer des opérations de classification proprement dites, chaque réseau de neurones doit apprendre la tâche qu'il aura à accomplir. Cette étape s'effectue à partir de classes d'exemples.

Il peut être intéressant de procéder à un apprentissage complémentaire qui est effectué par chaque réseau de neurones pour sa classe d'exemples par modification de ses coefficients synaptiques pour parfaire son adaptation à sa propre classe sur la base d'un algorithme d'apprentissage.

Deux modes sont possibles :
- en mode supervisé, l'étape d'apprentissage est effectuée, avec des classes d'exemples prises dans un catalogue de textures,
- en mode non supervisé, un au moins des apprentissages est effectué par des phases adaptatives sur le flux de données découpé en blocs.

Ainsi le réseau de neurones apprend par lui-même.

Pour déterminer parmi les M réseaux de neurones lequel est le mieux adapté à un exemple donné, il est nécessaire de comparer la sortie obtenue avec le résultat qu'il aurait dû délivrer. Ceci est effectué sur la base d'un critère d'erreur. Celui-ci est par exemple l'erreur quadratique moyenne entre la sortie et la référence choisie.

Selon le procédé il est possible d'opérer en autoassociation. Dans ce cas le critère d'erreur d'attribution d'un réseau de neurones à une classe porte sur une comparaison entre l'exemple placé en entrée et le résultat en sortie d'un même réseau de neurones.

Mais il est également possible d'opérer en hétéroassociation. Dans ce cas le critère d'erreur d'attribution d'un réseau de neurones à une classe opère la mesure d'une norme sur les sorties d'un même réseau de neurones.

Cette norme peut être une norme quadratique.

A l'issue de cette étape, chaque réseau de neurones va être affecté à une classe d'exemples pour laquelle il délivre les résultats les meilleurs. Il est alors possible d'exploiter les réseaux de neurones pour opérer les étapes de classification ultérieures. Néanmoins préférentiellement on parfait l'adaptation de chaque réseau de neurones à la classe à laquelle il est affecté. Cet apprentissage complémentaire ou l'apprentissage principal peuvent être effectués par l'algorithme de rétropropagation du gradient connu par exemple de l'article :
"PARALLEL DISTRIBUTED PROCESSING" D.E. RUMELHART, G.E. HINTON, R.J. WILLIAMS, Learning Internal Representations by error propagation chap. 8 p.318 MIT Press. Editeur J.A. FELDMAN, P.J. HAYES, D.E. RUMELHART.

Ce critère peut être l'algorithme d'analyse en composantes principales de la matrice de covariance qui est connu par exemple du document :
"Auto-Association by Multilayer Perceptrons and Singular Value Decomposition" H. BOURLARD & Y. KAMP Biological Cybernetics, vol .59, 1988 pp. 291-294.

En effet, chaque classe de textures possède des composantes principales qui lui sont propres et qui la différencient d'une autre classe de textures.

Le mécanisme d'apprentissage va donc consister à minimiser les écarts observés pour les résultats de sortie par rapport aux composantes principales de la classe de textures concernée.

Le flux de données à traiter par le procédé selon l'invention peut être issu d'éléments d'images codés constituant une image à analyser. Il peut également concerner des informations acoustiques ou tout autre flux de données. La caractéristique locale d'une donnée peut être formée d'une moyenne des données de ses plus proches voisins.

L'invention concerne également un analyseur. Dans le cas de l'autoassociation l'analyseur comprend plusieurs couples de réseaux de neurones, un couple étant constitué d'un réseau de neurones de codage et d'un réseau de neurones de décodage apparié, un circuit de sélection comparant lors de l'étape de codage et pour chaque couple, les données d'entrée du réseau de neurones de codage avec les données de sortie de son réseau de neurones de décodage, le critère de sélection du meilleur codage consistant à sélectionner le couple de réseaux de neurones pour lequel cet écart est minimal.

Dans le cas de l'hétéroassociation l'analyseur comprend un circuit de sélection qui détermine la somme de toutes les énergies des neurones de sortie de chaque réseau de neurones de codage et sélectionne celui pour lequel cette énergie est maximale.

Il est possible de limiter le nombre d'analyseurs utilisés. En effet après l'apprentissage, des réseaux de neurones peuvent donner en exploitation des résultats similaires. Ces résultats peuvent se regrouper en familles pour lesquelles les écarts sont très proches. Il suffit alors de choisir dans chaque famille un des réseaux de neurones représentant cette famille. On obtient ainsi un système pour lequel les données décodées sont formées par un nombre plus restreint de réseaux de neurones, c'est-à-dire un par famille.

Dans ce cas le nombre de réseaux de neurones sélectionnés est égal au nombre de familles qui regroupent des réseaux de neurones au comportement similaire déterminé par un critère de similitude.

Pour améliorer la qualité de l'analyse de texture il est possible de limiter le nombre P de neurones de la couche cachée ainsi que le nombre de bits $Q_k$ alloués à chaque état de neurones $Y_k$ - $(1<k<P)$.

Il est également possible que chaque réseau de neurones reçoit ses coefficients synaptiques sous la commande d'un signal de commande à partir d'une mémoire qui stocke les coefficients synaptiques aptes à coder plusieurs classes d'exemples de données. La mémoire est chargée à la fin des phases d'apprentissage.

L'invention sera mieux comprise à l'aide des figures suivantes données à titre d'exemples non limitatifs qui représentent :

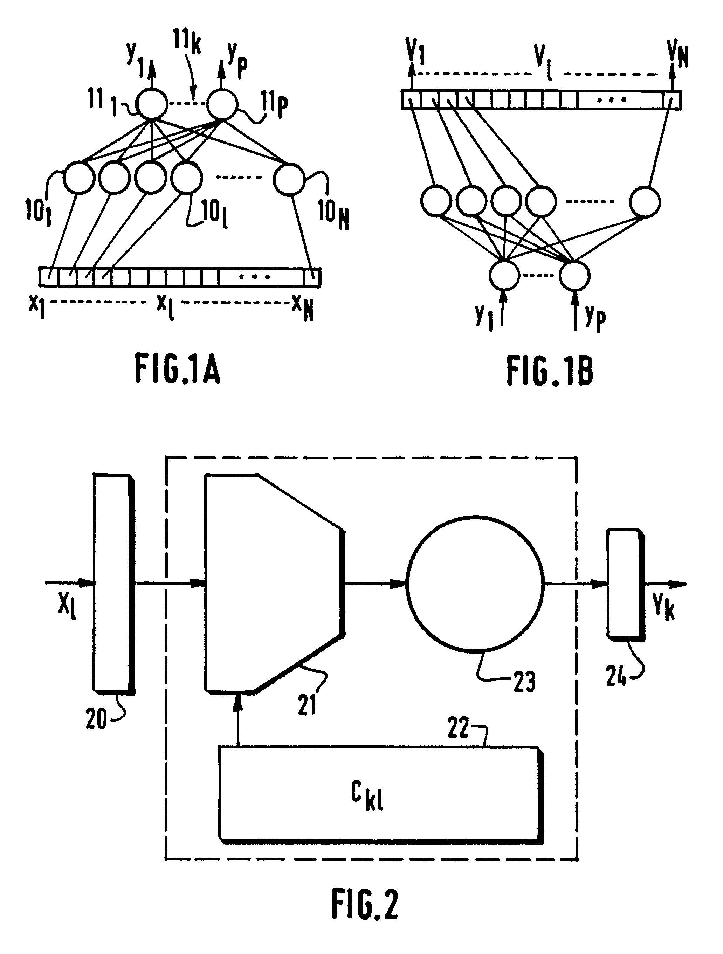

. figures 1A, 1B : une représentation schématique d'un réseau de neurones de codage et de décodage,

. figure 2 : un schéma d'une unité de traitement d'un réseau de neurones,

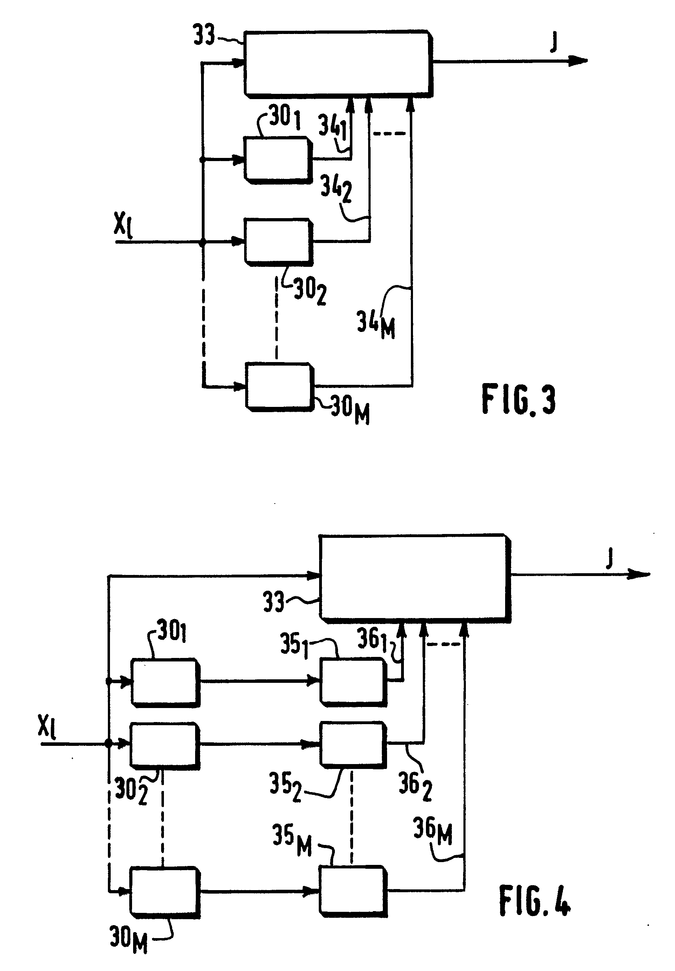

. figures 3, 4 deux schémas d'un analyseur selon l'invention,

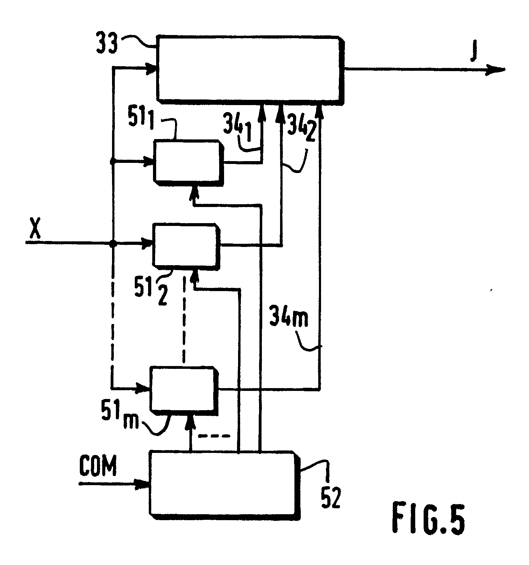

. figure 5 : un schéma semblable à celui de la figure 3 mais avec une mémoire de l'ensemble des coefficients synaptiques.

La figure 1A représente un schéma du principe du traitement effectué par un réseau de neurones de codage. Les données d'entrée $x_1...x_l...x_N$ sont présentées au réseau et arrivent sur les neurones d'entrée $10_1$ à $10_N$ d'une couche d'entrée. Ces neurones sont connectés aux neurones de sortie $11_1...11_k...11_p$ d'une couche de sortie. A chaque liaison est associé un coefficient synaptique $C_{kl}$ - (l:entrée, k: sortie). Le nombre de neurones d'entrée N est supérieur ou égal au nombre de neurones de sortie P afin d'effectuer une compression des données. Ce sont ces données codées qui peuvent être utilisées pour la sélection d'un index. Celui-ci peut être transmis par une liaison par fils ou par un milieu de transmission.

Les sorties $Y_k$ sont calculées suivant l'équation :

$$y_k = F(\sum_k C_{kl} X_l)$$

où F peut être la fonction d'identité $(F(x) = x)$ ou bien une fonction non-linéaire. Les sorties $y_k$ peuvent éventuellement être quantifiées sur Q bits lors de la phase d'apprentissage et/ou de résolution. Une quantification judicieuse permet d'obtenir lors de la résolution une bonne qualité d'analyse de textures.

La figure 1B représente le schéma de principe du traitement effectué par le réseau de neurones de décodage en couches reliées entre elles comme pour le réseau de neurones de codage. Il reçoit les données codées $y_1..y_p$ et délivre en sortie des données décodées $V_1...V_N$.

Les sorties $V_1$ sont calculées suivant l'équation :

$$V_s = \delta(\sum W_{s,k} y_k)$$

où $\delta$ peut être la fonction identité ou bien une fonction non linéaire. Les $W_{s,k}$ représentent les coefficients synaptiques liant le neurone d'entrée k au neurone de sortie s.

Selon un premier mode de réalisation l'analyseur peut comprendre uniquement des réseaux de neurones de codage du type de la figure 1A.

Selon un second mode de réalisation l'analyseur comprend à la fois des réseaux de neurones de codage et de décodage selon les types des figures 1A et 1B.

La figure 2 représente un processeur de traitement d'un réseau de neurones. Un registre d'entrée 20 délivre les données d'entrée $X_l$ à une unité de calcul 21 qui effectue le calcul :

$$\sum_k C_{kl}, X_l.$$

Les coefficients synaptiques $C_{kl}$ sont lus dans une mémoire 22. La sortie de l'unité de calcul est reliée à un quantifieur 23 qui applique une fonction non linéaire F. Les données codées $y_k$ apparaissent sur un registre de sortie 24.

Avant d'effectuer des phases d'analyse (codage seul ou bien codage et décodage) on doit effectuer des phases d'apprentissage des coefficients synaptiques des réseaux de neurones c'est-à-dire qu'ils doivent apprendre la tâche à laquelle il est affecté. Pour cela on présente sur l'entrée des exemples prédéterminés pour lesquels le résultat désiré est connu à l'avance. Il suffit de comparer les résultats obtenus avec les résultats désirés et selon un mécanisme adaptatif les coefficients synaptiques $C_{kl}$ sont adaptés à la tâche prévue. Cette adaptation ne sera pas développée ici. Elle est effectuée de manière connue pour un réseau de neurones. Différents algorithmes sont possibles, les plus utilisés étant l'algorithme de rétropropagation du gradient et l'algorithme de l'analyse en valeurs principales. Des références ont déjà été citées pour la mise en oeuvre de ces algorithmes.

Les figures 3, 4, 5 représentent des schémas d'un analyseur selon l'invention.

Selon un premier mode de réalisation de l'analyseur, représenté sur la figure 3, celui-ci comprend M réseaux de neurones de codage $30_1$, $30_2...30_M$ qui reçoivent tous les données d'entrée $x_l$. Chaque réseau de neurones opère pour une classe d'exemples prédéterminés sur lequel il s'est adapté au cours de la phase d'apprentissage.

Dans ce cas le circuit de sélection 33 reçoit les sorties $y_k$ $34_1...34_M$ de tous les réseaux de neurones et détermine une caractéristique, par exemple l'énergie des données, et sélectionne le réseau de neurones qui maximise cette énergie.

Le circuit de sélection 33 émet l'index J correspondant au réseau de neurones sélectionné.

Ainsi l'invention concerne un analyseur pour l'analyse de textures de données comprenant M réseaux de neurones de codage avec M>1 qui apprennent puis effectuent un même type de transformée et qui sont mis en compétition, chaque réseau ayant un nombre de neurones d'entrée supérieur ou égal au nombre de neurones de sortie, un circuit de sélection sélectionnant, sur la base d'un critère de sélection, le réseau de neurones de codage qui effectue le meilleur codage et transmettant l'index de ce réseau de neurones sélectionné.

Selon un second mode de réalisation l'analyseur est représenté sur la figure 4.

Dans ce cas chaque réseau de neurones de codage $30_1...30_M$ est suivi d'un réseau de neurones de décodage $35_1...35_M$. Le circuit de sélection 33 reçoit alors les sorties $36_1...36_M$ de ces réseaux de neurones de décodage et compare chacune de ces sorties avec les données d'entrée $x_I$. Le circuit de sélection détermine alors le réseau de neurones qui effectue le meilleur codage et délivre son index J.

Ainsi l'invention concerne un analyseur pour l'analyse de textures de données comprenant M réseaux de neurones de codage et M réseaux de neurones de décodage avec M>1 qui apprennent puis effectuent un même type de transformée et qui sont mis en compétition, chaque réseau de codage ayant un nombre de neurones d'entrée supérieur ou égal au nombre de neurones de sortie, un circuit de sélection sélectionnant sur la base d'un critère de sélection le réseau de neurones de codage qui effectue le meilleur codage et transmettant l'index de ce réseau de neurones sélectionné.

Pour diminuer la quantité de matériel nécessaire pour mettre M réseaux de neurones en compétition, il peut être intéressant d'utiliser un nombre de réseaux de neurones inférieur à M. Ceci est représenté sur la figure 5 en prenant le cas du codeur de la figure 3 mais ceci n'est pas limitatif. En effet il est suffisant d'utiliser m réseaux de neurones $51_1...51_m$ avec m<M et de charger dans ces m réseaux de neurones leurs coefficients synaptiques à partir d'une mémoire 52 qui renferme la totalité des coefficients synaptiques à exploiter. La lecture de cette mémoire se fait par un signal de commande COM qui peut être activé soit cycliquement selon un nombre donné d'images soit selon un autre critère. On n'exploite ainsi à un instant donné que les réseaux de neurones susceptibles d'être exploités à cet instant.

Dans ce cas le circuit de codage est caractérisé en ce que les réseaux de neurones de codage reçoivent leurs coefficients synaptiques sous la commande d'un signal de commande, à partir d'une mémoire qui stocke les coefficients synaptiques aptes à coder plusieurs classes d'exemples de données.

## Revendications

1. Procédé pour l'analyse de textures associées à un flux de données organisé en classes de données mis en oeuvre à l'aide d'un analyseur qui opère une transformée à l'aide de réseaux de neurones d'analyse ayant un nombre de neurones d'entrée supérieur ou égal au nombre de neurones de sortie, le procédé mettant en compétition les réseaux de neurones selon les étapes suivantes :
- initialisation des coefficients synaptiques de chaque réseau de neurones,
- introduction dans les réseaux de neurones de classes d'exemples présentés sous la forme de caractéristiques locales propres à chaque donnée,
- apprentissage par les réseaux de neurones par adaptation de leurs coefficients synaptiques à des exemples de blocs de données d'entrée,
- résolution par les réseaux de neurones d'un flux de données d'entrée afin d'opérer des classifications de données pour délivrer des informations de classes de textures relatives au flux de données,
- détermination du réseau de neurones qui délivre le meilleur résultat pour chaque classe d'exemples présentés sur la base d'un critère d'erreur entre la sortie obtenue et une référence choisie et attribution de chaque réseau de neurones à la classe qu'il représente le mieux et émission d'un index de sélection.

2. Procédé selon la revendication 1 caractérisé en ce que, un apprentissage complémentaire est effectué par chaque réseau de neurones pour sa classe d'exemples par modification de ses coefficients synaptiques pour parfaire son adaptation à sa propre classe sur la base d'un algorithme d'apprentissage.

3. Procédé selon une des revendications 1 ou 2 caractérisé en ce que, l'étape d'apprentissage est effectuée, en mode supervisé, avec des classes d'exemples prises dans un catalogue de textures.

4. Procédé selon une des revendications 1 ou 2 caractérisé en ce que, un au moins des apprentissages est effectué par des phases adaptatives en mode non-supervisé sur le flux de données découpé en blocs.

5. Procédé selon une des revendications 1 à 4 caractérisé en ce que, chaque réseau de neurones opère en auto-association, le critère d'erreur d'attribution d'un réseau de neurones à une classe porte sur une comparaison entre l'exemple placé en entrée et le résultat en sortie d'un même réseau de neurones.

6. Procédé selon une des revendications 1 à 4 caractérisé en ce que, chaque réseau de neurones opère en hétéroassociation, le critère d'erreur d'attribution d'un réseau de neurones à une classe opérant la mesure d'une norme sur les sorties d'un même réseau de neurones.

7. Procédé selon une des revendications 1 à 6 caractérisé en ce que, un au moins des apprentissages est effectué selon l'algorithme de rétropropagation du gradient d'erreur.

8. Procédé selon une des revendications 1 à 6 caractérisé en ce que, un au moins des apprentissages est effectué selon l'algorithme d'analyse en composantes principales de la classe de texture.

9. Procédé selon une des revendications 1 à 8 caractérisé en ce que, le flux de données est issu de pixels constituant une image à analyser.

10. Procédé selon la revendication 9 caractérisé en ce que la caractéristique locale d'une donnée est formée d'une moyenne des données de ses plus proches voisins.

11. Procédé selon une des revendications 1 à 8 caractérisé en ce que, le flux des données représente des informations acoustiques.

12. Analyseur pour la mise en oeuvre du procédé selon une des revendications 5 ou 7 à 11 caractérisé en ce qu il comprend plusieurs couples de réseaux de neurones, un couple étant constitué d'un réseau de neurones de codage et d'un réseau de neurones de décodage apparié, un circuit de sélection comparant lors de l'étape de codage et pour chaque couple, les données d'entrée du réseau de neurones de codage avec les données de sortie de son réseau de neurones de décodage, le critère de sélection du meilleur codage consistant à sélectionner le couple de réseaux de neurones pour lequel cet écart est minimal.

13. Analyseur pour la mise en oeuvre du procédé selon une des revendications 6 à 11 caractérisé en ce qu'un circuit de sélection détermine la somme de toutes les énergies des neurones de sortie de chaque réseau de neurones de codage et sélectionne celui pour lequel cette énergie est maximale.

14. Analyseur selon une des revendications 12 ou 13 caractérisé en ce que le nombre de réseaux de neurones sélectionnés est égal au nombre de familles qui regroupent des réseaux de neurones au comportement similaire déterminé par un critère de similitude.

15. Analyseur selon une des revendications 12 à 14 caractérisé en ce que chaque réseau de neurones reçoit ses coefficients synaptiques sous la commande d'un signal de commande à partir d'une mémoire qui stocke les coefficients synaptiques aptes à coder plusieurs classes d'exemples de données.

**FIG.1A**

**FIG.1B**

**FIG.2**

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PROCEEDINGS OF THE INTERNATIONAL CONFERENCE ON DIGITAL SIGNAL PROCESSING, Florence, 30 août - 2 septembre 1978, partie 2, pages 49-61; J.P. GAMBOTTO et al.: "A multidimensional filtering approach to pattern recognition with application to texture classification and segmentation" * En entier * | 1,2,7 | G 06 K    9/66<br>G 06 F   15/70 |
| Y | BIOL. CYBERNETICS, vol. 38, no. 4, 1980, pages 91-101, Springer-Verlag, Heidelberg, DE; Y. HIRAI: "A template matching model for pattern recognition: Self-organization of templates and template matching by a disinhibitory neural network" * Résumé; pages 91-93 * | 1,2,7 | |
| A | PROCEEDINGS OF THE 1ST INTERNATIONAL CONF. ON COMPUTER TECHNOLOGY, SYSTEMS AND APPLICATIONS, Hamburg, 11-15 mai 1987, pages 859-863, IEEE, New York, US; M.H. AL-MUIFRAJE et al.: "Networks of memory elements - a processor for industrial piece-parts recognition" * En entier, figures 1,2 * | 1-11 | **DOMAINES TECHNIQUES RECHERCHES (Int. Cl.5)**<br><br>G 06 K<br>G 06 F |
| A | IEEE TRANSACTIONS ON ACOUSTICS, SPEECH, AND SIGNAL PROCESSING, vol. 36, no. 7, July 1988, pages 1109-1117, IEEE, New York, US; B. WIDROW et al.: "Layered neural nets for pattern recognition" * En entier *      -/- | 2 | |

Le présent rapport a été établi pour toutes les revendications

| Lieu de la recherche | Date d'achèvement de la recherche | Examinateur |
|---|---|---|
| LA HAYE | 30-07-1990 | CHATEAU J.P. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | LA RECHERCHE, vol. 19, no. 204, novembre 1988, Paris, FR; L. PERSONNAZ et al.: "Les machines neuronales" * En entier * | 1-11 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 30-07-1990 | CHATEAU J.P. |